# EUROPÄISCHE PATENTANMELDUNG

(11) **EP 0 754 750 A2**
(43) Veröffentlichungstag der Anmeldung: **22.01.1997**
(21) Anmeldenummer: 96111537.5
(22) Anmeldetag: 17.07.1996
(51) Int. Cl.: C12C 12/00, C12H 1/18

(54) **Verfahren zur Herstellung von hefetrüben Bieren**

(30) Priorität: 17.07.1995 DE 19526005
(71) Anmelder: Tucher Bräu AG, 90409 Nürnberg (DE)
(72) Erfinder: Rübelmann, Klaus, Dr., 85406 Zolling (DE); Leibhard, Martin, Dr., 82275 Emmering (DE); Ammon, Maximilian, 91174 Spalt (DE); Wojtenek, Klaus, 90763 Fürth (DE); Rother, Hans-Günter, 90427 Nürnberg (DE); Sprotte, Jochen, 90408 Nürnberg (DE); Rammelmeier, Georg, 92283 Lauterhofen (DE)
(74) Vertreter: KUHNEN, WACKER & PARTNER

(57) **Zusammenfassung**

Offenbart wird ein Verfahren zur Herstellung von hefetrüben Bieren, insbesondere von Weizenbier, bei dem es möglich ist, den bei der Befüllung zwangsläufig in den Behälter gelangten Sauerstoff nahezu vollständig abzubauen und trotzdem eine in der Abfüllanlage integrierte Durchlaufpasteurisierung vorzunehmen. Hierzu wird dem Bier vor der Abfüllung erneut Hefe sowie Bierwürze zugegeben und die Hefe in dem in einem Gebinde befindlichen Bier binnen 24 Stunden nach der Abfüllung abgetötet. Damit kann keimfreies und sehr geschmacksstabiles Bier erzeugt werden, das sich auch für den Vertrieb als Dosenbier und für den Export selbst in ferne Länder eignet.

## Beschreibung

Die Erfindung bezieht sich auf ein Verfahren zur Herstellung von hefetrüben Bieren, insbesondere von Weizenbier, bei dem gehopfte Bierwürze durch Zugabe von Hefe vergoren wird, wonach das so hergestellte Bier in geeignete Behälter abgefüllt wird.

Derartige Verfahren sind zum Brauen von Weißbier bzw. Weizenbier, Kräusenbier und anderen hefetrüben Bieren seit langem bekannt und finden sehr verbreitete Anwendung. Da die früher vorherrschende enge räumliche Bindung der Brauereien an deren Umland durch die vorhandenen Lagerungs- und Transportmöglichkeiten in weitem Maße aufgehoben ist, werden derartige Biere nun auch über längere Zeiten gelagert und zum Teil sogar unter schwierigen klimatischen Bedingungen ins ferne Ausland geliefert.

Die damit neu geschaffenen Anforderungen an die Haltbarkeit und Keimfreiheit der Biere erfordern entsprechende Maßnahmen, die den Anforderungen hinsichtlich der Geschmacksbeständigkeit zum Teil entgegenstehen.

Ein wesentliches Problem stellt der bei der Abfüllung in den Behälter mit eingebrachte Sauerstoff der Luft dar. Das sich im Behälter befindende Bier reagiert im Laufe der Zeit mit diesem Sauerstoff, was zu einer Verminderung der Geschmacksqualität führt. Daher ist man bei der Flaschenabfüllung dazu übergegangen, diese zu evakuieren, anschließend mit Kohlendioxid zu spülen, unter Kohlendioxidüberdruck zu setzen und dann das Bier einzufüllen. Die Flaschen werden schließlich mit einem Kronkorken gasdicht abgeschlossen. Aber auch bei diesem Verfahren gelangt beim Abfüllvorgang immer noch ein gewisses Ausmaß an Luftsauerstoff in die Flasche.

Beim Abfüllen des Bieres in Dosen erhält dieses Problem noch weitaus größere Bedeutung. Da die Dose während der Befüllung aufgrund ihrer mangelnden Druckfestigkeit nicht optimal evakuiert werden kann und überdies eine größere Oberfläche bietet, gelangt noch wesentlich mehr Sauerstoff in die Dose als beim Abfüllen in die Flasche.

In der Brauereitechnik ist ferner das Verfahren der Flaschengärung weit verbreitet. Insbesondere bei Weizenbieren wird vor der Abfüllung das u. U. kurzzeiterhitzte Bier nochmals mit Bierwürze und Hefe versetzt. In der Flasche wird nun der zugesetzte Restextrakt vergoren, wodurch der Sauerstoff im Behälter verbraucht wird. Bei dieser Nachgärung, die in der Regel über Wochen vonstatten geht, entstehen aber auch Gärungsnebenprodukte und die verbrauchte Hefe verbleibt im Bier, was zu einer Minderung der Geschmacksqualität führen kann.

Für den Vertrieb von Bier in ferne Länder ist es ferner von Bedeutung, daß nach dem Abfüllen eine thermische Abtötung von Keimen, z.B. durch Pasteurisierung, in den Behältern vorgenommen wird, um die Keimfreiheit sicherzustellen und Produktschädigungen, wie z.B. Geschmacksverschlechterungen, durch das Wirken von bierschädlichen Keimen zu vermeiden. Dies hat allerdings den wesentlichen Nachteil, daß zum Zwecke der Nachgärung eingebrachte Hefe ihre Wirkung nicht mehr entfalten kann und somit der Sauerstoff im Behälter nicht abgebaut wird. Zudem wird der im Behälter vorhandene Sauerstoff durch die Temperaturerhöhung bei der Pasteurisierung aktiviert, was zu einem beschleunigten "Alterungsprozeß" des Bieres führt. Das Bier erfährt daher durch die Wechselwirkung mit dem Sauerstoff eine sich mit zunehmender Dauer vermindernde Geschmacksqualität, die noch durch Temperatureinflüsse und Bewegungen verstärkt wird.

Die z.T. bei anderen Getränken praktizierte Zugabe von Wirkstoffen, wie z.B. Ascorbinsäure oder Vitamin C, kann diese Probleme zwar eindämmen, wird aber angesichts des deutschen Reinheitsgebotes für Bier nicht angewendet.

Es ist daher Aufgabe der Erfindung, ein Verfahren zur Herstellung von hefetrüben Bieren zu schaffen, bei dem der weitestgehende Abbau des Sauerstoffes im Behälter möglich wird und trotzdem eine thermische Abtötung von Keimen im Behälter durchgeführt werden kann.

Diese Aufgabe wird dadurch gelöst, daß dem Bier vor der Abfüllung erneut Hefe sowie Bierwürze zugegeben wird, und daß die Hefe in dem in einem Gebinde befindlichen Bier binnen 24 Stunden nach der Abfüllung, insbesondere durch Pasteurisierung, abgetötet wird.

Wie sich überraschenderweise ergeben hat, reicht die relativ kurze Zeit zwischen der Abfüllung und der thermischen Abtötung aus, damit der sich im Behälter befindende Sauerstoff nach einer definierten Zugabe an Hefe und Bierwürze abgebaut werden kann. Damit kann die Gefahr einer Geschmacksminderung aufgrund der Wechselwirkung des Sauerstoffes mit dem Bier gebannt werden.

Zudem liegt die zugegebene Hefe nach dem Pasteurisieren stabil im Produkt vor und beeinträchtigt so nicht die Geschmacksqualität des Bieres. Darüber hinaus kann der Wachstumsprozeß der Hefe rechtzeitig abgebrochen werden, bevor die Gärung intensiv einsetzt und vermehrt Nebenprodukte entstehen. Diese würden zusammen mit der verbrauchten Hefe eine Geschmacksverschlechterung herbeiführen, wie sie nach einer gewissen Zeit bei der Flaschengärung auftritt.

Ferner können die Anforderungen hinsichtlich der Keimfreiheit dieses Lebensmittels auch bei einem Export in ferne Länder erfüllt werden. Das hierbei auftretende Risiko einer Geschmacksverschlechterung und sogar eines Zerberstens des Behälters aufgrund einer Kontamination mit bierschädlichen Keimen kann durch die Pasteurisierung vermieden werden.

Dem deutschen Reinheitsgebot für Bier wird durch dieses Verfahren ebenfalls Rechnung getragen.

Mit diesem gezielten Abbau des Sauerstoffes im Behälter wird ferner der Verfahrensschritt des Evakuierens der Behälter vor dem Befüllen nicht mehr zwingend notwendig. Darüber hinaus kann auch auf die Kohlendioxidvorspülung und -vorspannung der Behälter verzichtet werden. Auch die in herkömmlichen Verfahren vor der Abfüllung durchgeführte Kurzzeiterhitzung kann so unterlassen werden.

Ferner läßt sich das bei der thermischen Abtötung stufenweise vorgenommene Anwärmen des Bieres dazu nutzen, daß die Hefe ihre optimale Wirkung entfalten kann, die sie in einem Temperaturbereich zwischen 16 und 25°C hat. Die zur Abtötung notwendige Erwärmung kann somit nebenher zur Steuerung des Sauerstoffabbaus während dem Wachstum der Hefe genutzt werden. Somit läßt sich ein geschmackstabiles Bier herstellen, bei dem alle Keime durch die abschließende thermische Abtötung abgestorben sind.

Von weiterem Vorteil ist es, wenn das Abtöten innerhalb eines kürzeren Zeitraums vorgenommen wird. Damit kann der Zeit- und Platzbedarf für eine Zwischenlagerung wesentlich verringert werden.

Dadurch, daß das Abtöten durch einen in der Abfüllanlage integrierten Durchlaufpasteur vorgenommen wird, kann der Verfahrensablauf wesentlich beschleunigt und zudem voll automatisiert werden.

Damit wird es möglich, das Abtöten innerhalb einer halben Stunde nach Abfüllung vorzunehmen, wodurch sich der weitere Vorteil ergibt, daß auf eine Zwischenlagerung bzw. Warteschleifen und Pufferstrecken der Zuführbänder weitestgehend verzichtet werden kann. Der Zeitbedarf für den Verfahrensablauf kann somit optimal niedrig gehalten werden.

Indem die Bierwürze im leicht angegorenen Zustand zugesetzt wird, kann die Vermehrung der Hefe sehr schnell in Gang gesetzt werden, was einen schnellen Abbau des Sauerstoffes ermöglicht.

Von weiterem Vorteil ist es, wenn die Hefe als assimilierte Hefe zugesetzt wird. Diese assimilierte Hefe ist auf die Reaktion mit dem Sauerstoff eingestellt und kann diesen sehr schnell abbauen.

Dadurch, daß sich die zugesetzte Hefe in der logarithmischen Phase befindet, entfaltet diese ihre optimale Wirkung und kann den Sauerstoff in schnellstmöglicher Weise abbauen.

Eine Zugabe an Hefe-Würze-Gemisch von weniger als 3 Vol%, vorzugsweise weniger als 2 Vol%, und insbesondere weniger als 1 Vol%, dient dazu, den Sauerstoffabbau möglichst exakt steuern zu können. Die nach der Pasteurisierung im Bier verbleibenden Hefeanteile und das Ausmaß der produzierten Nebenstoffe werden auf einem Minimum gehalten und die daraus resultierende Geschmacksminderung bleibt äußerst gering. Die so durch die erfindungsgemäße Nachgärung im Bier verbleibenden Reststoffe beeinträchtigen daher die Qualität des Bieres nicht.

Ist das zugegebene Hefe-Würze-Gemisch einer kontinuierlichen Hefekultur entnommen, so bietet dies weitere Vorteile hinsichtlich der ständigen Verfügbarkeit eines Gemisches mit gleichbleibender, hoher Qualität. Das Verfahren läßt sich zudem leicht automatisieren.

Die Erfindung wird nachstehend in Ausführungsbeipielen anhand den Figuren der Zeichnung näher erläutert. Es zeigt:
- Fig. 1: ein Fließschema eines erfindungsgemäßen Verfahrens zur Herstellung von hefetrüben Bieren;
- Fig. 2: den Wachstumsverlauf von Hefezellen;
- Fig. 3: den Temperaturverlauf zwischen der Abfüllanlage und dem Pasteur;
- Fig. 4: den Verlauf des Sauerstoffgehaltes im Behälter entsprechend Fig. 3;
- Fig. 5: den Verlauf des Restextraktgehaltes im Behälter entsprechend Fig. 3; und
- Fig. 6: den Verlauf des Kohlendioxidgehaltes entsprechend Fig. 3.

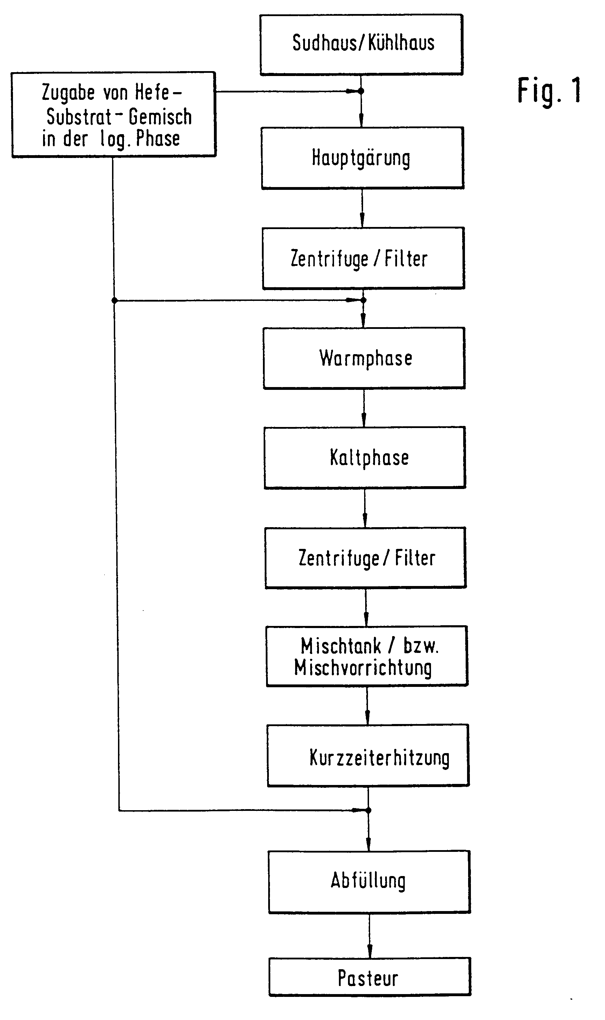

Gemäß der Darstellung in Fig. 1 wird bei einem Verfahren zur Herstellung von hefetrüben Bieren ein HefeSubstratgemisch in der logarithmischen Phase zu einer gehopften Bierwürze aus dem Sud- bzw. Kühlhaus zugegeben.

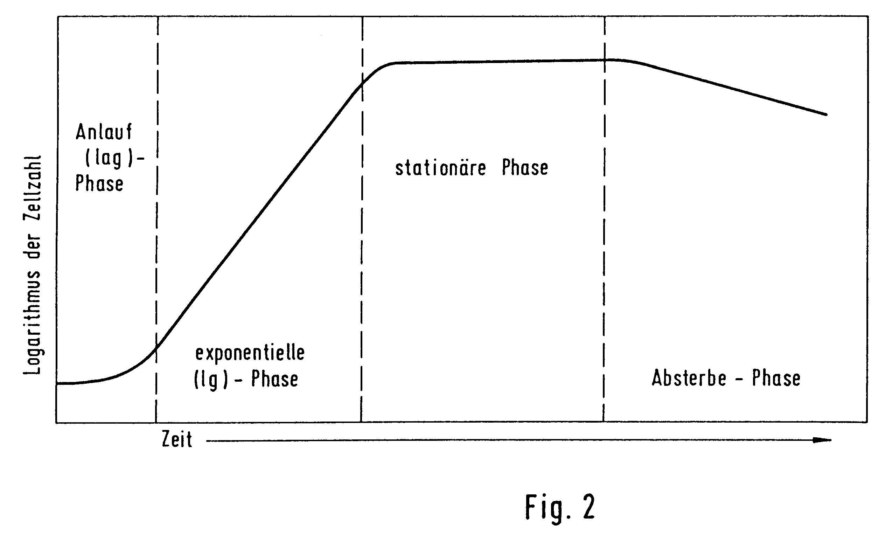

Anhand Fig. 2 kann die Bedeutung der sogenannten "exponentiellen" oder "logarithmischen Phase" aufgezeigt werden. Fig. 2 zeigt anhand einer statischen Kultur die Anzahl der Hefezellen in der Bierwürze in Abhängigkeit von der Zeit. Ausgangspunkt ist dabei eine Stammwürze von 12,5 %, in der sich die Bierwürze in unvergorenem Zustand befindet. Die Hefe wird als sog. "Reinzuchthefe" eingebracht und die Anzahl der Hefezellen steigt in der Anlaufphase zunächst langsam an, um anschließend sehr große Zuwachsraten mit einem in dieser Darstellungsweise fast linearen Verlauf aufzuweisen. Dieser Bereich wird als die "exponentielle" bzw. "logarithmische Phase" bezeichnet. Sie ist durch eine konstante maximale Teilungsrate der Hefezellen gekennzeichnet.

Anschließend tritt die stationäre Phase auf, in der die Wachstumskurve zunehmend verflacht. Bis zu diesem Bereich liegt die "aerobe Phase" der Hefe vor, in der eine Vermehrung der Hefezellen bei Sauerstoffverbrauch auftritt.

Die Gärung setzt im wesentlichen erst ein, wenn der vorhandene Sauerstoff für die Wachstumszwecke der Hefezellen verbraucht ist und stellt eine Art "Notstoffwechsel" der Hefe dar. Die Hefezellen bevorzugen also eine aerobe Umgebung und erzeugen dabei ein Vielfaches der Energie, wie unter Sauerstoffausschluß. Diese Energie nutzen die Hefezellen zum exponentiellen Wachstum. Die Gärung findet schließlich unter anaeroben Bedingungen statt und durch sie entstehen der wesentliche Alkoholanteil und Gärungsnebenstoffe, wie höhere Alkohole, Ester etc.

Nach der stationären Phase der Wachstumskurve gemäß Fig. 2 tritt eine Art "Selbstvergiftung" der Hefe durch Stoffwechselprodukte aus der nun einsetzenden Gärung auf. Dieser Bereich wird als Absterbe-Phase bezeichnet. Die Anzahl der aktiven Hefezellen nimmt nachfolgend ab und die Zeitdauer für eine weitere Vergärung verlängert sich zusehends.

Der annähernd lineare Anstiegsbereich, die "logarithmische Phase", kennzeichnet den Bereich, dem das Hefe-Würze-Gemisch vorteilhafter Weise entnommen wird, damit ein geschmacksstabiles Bier erreicht werden kann. Die Hefezellen befinden sich hier im größten Wachstum und können daher ein großes Maß an Sauerstoff aufnehmen.

Nachdem das Hefe-Substrat-Gemisch bzw. Hefe-Würze-Gemisch zur gehopften Bierwürze zugegeben ist, findet gemäß Fig. 1 die Hauptgärung statt. Die in Zucker umgewandelte Stärke des Malzes wird hier einer Vergärung unterzogen, wobei Alkohol, Kohlendioxid und Nebenprodukte entstehen. Hierbei wird bei untergärigen Bieren in der Regel ein Temperaturbereich zwischen ca. 4°C und 10°C und bei obergärigen Bieren zwischen ca. 10°C und ungefähr 30°C eingehalten. In der Praxis wird von diesen Grenzen z.T. auch abgewichen.

Nachfolgend wird die verbrauchte Hefe Zentrifugiert und anschließend gegen frische, gärkräftige Hefe ausgetauscht. Damit kann in der sogenannten Warmphase bei ca. 20°C bis 25°C ein Diacetylabbau stattfinden. Diacetyl ist ein Gärungsnebenprodukt, das aus geschmacklichen Gründen nicht erwünscht ist.

Bei einer Temperatur von in der Regel -2°C bis 8°C findet in der anschließenden sogenannten Kaltphase eine Stabilisierung bzw. Reifung des Bieres statt. Mittels der anschließenden Zentrifuge und dem Mischtank bzw. der Mischvorrichtung wird eine definierte Hefezellenzahl und Trübung des Bieres eingestellt.

Anschließend erfolgt eine Kurzzeiterhitzung, die dem Abtöten von eventuell vorhandenen Bierschädlingen und der Hefe zur Stabilisierung der mikrobiologischen Haltbarkeit dient. Auf diese Kurzzeiterhitzung könnte bei einer abschließend durchgeführten Pasteurisierung verzichtet werden.

Andererseits wird sie genutzt, um eine klar definierte "Nachgärung" unter Zugabe eines Hefe-Substrat-Gemisches in der logarithmischen Phase zu erreichen. Eine exakte Dosierung dieses Gemisches sorgt für eine gezielte Sauerstoffreduzierung des Bieres und damit für eine Erhöhung der geschmacklichen Haltbarkeit.

Damit das zugegebene Hefe-Würze-Gemisch wie gewünscht seine volle Wirkung im Behälter, z.B. der Dose, entfalten kann, erfolgt die Zugabe erst kurz vor dem Abfüllen.

Das Bier wird in der Abfüllung in Behälter, in diesem Beispiel in Dosen, abgefüllt. Anschließend werden die Behälter zu einem Durchlaufpasteur weitertransportiert, in dem eine thermische Abtötung von Keimen stattfindet. Diese Pasteurisierung findet vorwiegend bei Dosenbier und Exportbier statt.

Das vor der Abfüllung zugegebene Hefe-Substrat-Gemisch reagiert im kurzen Zeitraum zwischen der Zugabedosiereinrichtung und dem Pasteur mit dem Sauerstoff, der sich noch im Behälter befindet. Da sich die Hefe in der logarithmischen Phase befindet, nimmt sie ein großes Ausmaß an Sauerstoff auf und nutzt diesen zur Vermehrung der Hefezellen.

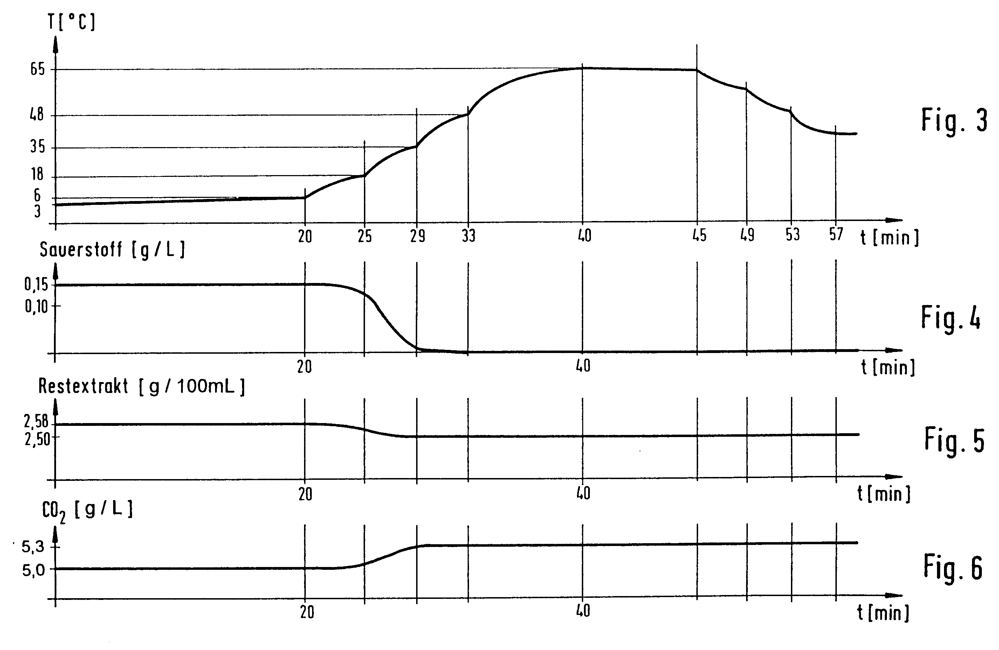

Der Temperaturverlauf in diesem Bereich ist in Fig. 3 dargestellt. Ausgehend von einer Abfülltemperatur von ca. 3°C erhöht sich diese in einem Zeitraum von bis zu ca. 20 Minuten nur unwesentlich auf ca. 6°C aufgrund der Raumtemperatur. Dann gelangen die Behälter in den Pasteur und werden stufenweise durch ein Überströmen der Behälter mit warmen Wasser erwärmt. Die Temperatur wird dabei zunächst auf ca. 18°C erhöht. In diesem Temperaturbereich können die Hefezellen die optimale Wirkung entfalten und verbrauchen vermehrt Sauerstoff.

Im Verlauf einer weiteren Temperaturerhöhung im Pasteur auf ca. 35°C setzt sich das Wachstum der Hefezellen weiter fort und die Sauerstoffmenge im Behälter verringert sich zunehmend. Dabei wird die optimale Wachstumstemperatur von 28°C durchlaufen.

Ab einem Temperaturniveau von ca. 40°C während einer weiteren Erwärmung im Pasteur auf ca. 48°C stellen die Hefezellen ihr Wachstum ein und sterben unter der Endtemperatur von ca. 65°C im Pasteur vollständig ab. Die Temperatur für die thermische Abtötung im Pasteur wird in diesem Beispiel in einem Zeitraum von ca. 20 Minuten erreicht.

Aufgrund der günstigen Bedingungen während der Erwärmungsphase im Pasteur und der genau dosierten Menge des Hefe-Substrat-Gemisches kann der Sauerstoff im Behälter entsprechend der Darstellung in Fig. 4 so nahezu vollständig abgebaut werden.

Da die zugesetzten Hefezellen durch die Pasteurisierung im wesentlichen abtötet werden, bevor die stationäre Phase ihres Wachstumsverlaufes (vgl. Fig. 2) erreicht ist, tritt kaum Gärung auf und die Entstehung von unerwünschten Nebenprodukten kann somit größtenteils verhindert werden.

Durch die Pasteurisierung stirbt die Hefe noch in der Wachstumsphase ab und liegt so in stabiler Form im Bier vor. Eine Verschlechterung der Geschmacksqualität durch verbrauchte, vergorene Hefe, deren Zersetzungsprodukte und eventuelle Nebenprodukte der Gärung kann somit verhindert werden.

Nach der Pasteurisierung wird die Temperatur gemäß Fig. 3 wieder stufenweise abgesenkt.

Wie Fig. 5 entnommen werden kann, sinkt der Anteil an Restextrakt während diesen Vorgang von ca. 2,58 g/100ml auf ca. 2,50 g/100ml ab. Gemäß Fig. 6 steigt der Anteil an Kohlendioxid, das bei der Gärung entsteht, gleichzeitig nur geringfügig von ca. 5,0 g/l auf ca. 5,3 g/l.

Der Kohlendioxidanteil im Behälter ist insbesondere bei der Dose problematisch, da es unter ungünstigen Umständen bei zu hohen Werten zu Ausbeulungen und im Extremfall zu einem Platzen der Dosen im Pasteur kommen kann.

Wie aus den Diagrammen der Figuren 3 bis 6 ferner entnommen werden kann, wird die Maximaltemperatur im Pasteur von ca. 65°C etwa 40 Minuten nach dem Abfüllen erreicht. Aus Fig. 4 ist ersichtlich, daß der Sauerstoffgehalt aber bereits nach ca. einer halben Stunde vollständig abgebaut ist, nachdem der für das Wachstum der Hefezellen optimale Temperaturbereich durchlaufen ist.

Die Erfindung wird nachstehend anhand eines Zahlenbeispieles zur Dosenabfüllung von Weizenbier verdeutlicht.

### Beispiel: Dosenabfüllung (Stammwürze 12,5%)

| Abzufüllendes Bier | |
|---|---|
| CO₂ - Gehalt: | 5,0 g/l |
| Hefezellzahl: | 1,0 Mio Zellen pro ml |
| Restextrakt: | 2,5 g/100 ml |

| Zugabe Hefe/Würze-Gemisch | |
|---|---|
| Hefezellzahl: | 90 Mio Zellen pro/ml |
| Restextrakt: | 10,0 g/100 ml |

| Nach Zugabe von 1 Vol% Hefe/Würze-Gemisch | |
|---|---|
| Hefezellzahl: | ca. 1,9 Mio Zellen pro/ml |
| Restextrakt : | ca. 2,58 g/100ml |

Anhand dem Verhalten einiger Alterungskomponenten kann die Sauerstoffbelastung während des Produktionsverlaufes aufgezeigt werden. Hieraus lassen sich Rückschlüsse auf die geschmackliche Stabilität des Bieres ziehen. Typische Indikatoren hierfür sind 3-Methyl-Butanal und 2-Phenyl-Ethanal, wobei im folgenden Beispiel die Summe dieser Indikatoren als Maß für die Geschmacksstabilität herangezogen wird.

### Beispiel: Sauerstoffindikatoren

| | Summe der Sauerstoffindikatoren | Geschmack |
|---|---|---|
| vor Pasteur: | | |
| O-Bier | 10 µg/l | rein |
| V-Bier | 10 µg/l | rein |

| nach Pasteur und Alterung: | | |
|---|---|---|
| O-Bier | 70 µg/l | deutlich oxidiert, brotartig |
| V-Bier | 35 µg/l | rein |

| hierbei bezeichnet: | | |
|---|---|---|
| O-Bier: | Bier ohne Zugabe von Hefe/Würze-Gemisch | |
| V-Bier: | Bier mit Zugabe von Hefe/Würze-Gemisch vor der Abfüllung. | |

Aus diesem Beispiel ist der deutlich geringere Anteil an Alterungskomponenten bei einer Zugabe von Hefe/Würze-Gemisch vor der Abfüllung erkennbar. Die geschmackliche Stabilität des Bieres ist daher wesentlich besser.

Die Erfindung erlaubt neben den hier aufgezeigten Ausführungsbeispielen eine Reihe weiterer Gestaltungsansätze für das Verfahren zum Herstellen von hefetrüben Bieren.

Das Hefe-Würze-Gemisch kann z.B. auch einer kontinuierlichen Hefekultur entnommen werden. Während sich in der statischen Kultur die Kulturbedingungen fortwährend ändern, da die Hefedichte zunimmt und die Substratkonzentration absinkt, werden die Bedingungen in einer kontinuierlichen Kultur in einem gewünschten Bereich gehalten. Dabei wird der gewünschte Bereich, in der Regel die logarithmische Phase, durch wiederholte Übertragung der Hefezellen in ein neues, frisches Würzesubstrat auf Dauer beibehalten. Die neue Nährlösung bzw. Würze kann der Hefepopulation auch kontinuierlich zugeführt und in gleichem Maße verbrauchte Suspension abgeführt werden. Damit bleiben die Bedingungen in der Hefekultur annähernd konstant und es kann ein Hefe-Würze-Gemisch mit gleichbleibender Qualität erzielt werden. Gleichzeitig wird das Wachstum der Hefezellen und damit auch der Sauerstoffverbrauch im optimalen Bereich gehalten. Der Verfahrensablauf kann daher weiter automatisiert werden.

In der Praxis kann der Zeitraum für die Strecke zwischen der Abfüllanlage und dem Pasteur auch wesentlich kürzer sein, als die genannten 20 Minuten. Je nach Anordnungsweise und Bauweise der Anlagen kann die Stecke z.B. auch innerhalb von 3 Minuten bewältigt werden.

Das Verfahren beschränkt sich ferner nicht auf die Abfüllung in Dosen, sondern kann auch bei Flaschen, Fässern und sogar Containern Anwendung finden.

Auf die hier aufgezeigte Kurzzeiterhitzung vor der Abfüllung kann auch vollständig verzichtet werden. Damit könnte allerdings die abschließende Nachgärung vor der Pasteurisierung nicht mit einer entsprechend hohen Präzision durchgeführt werden.

Anstatt den verwendeten Zentrifugen nach der Hauptgärung bzw. der Kaltphase könnten auch Filter oder andere geeignete Trennsysteme eingesetzt werden.

Steht kein Hefe-Substrat-Gemisch in der logarithmischen Phase zur Verfügung, wäre ein größerer Zeitbedarf notwendig, der durch Warteschleifen oder Verzögerungbänder zwischen der Abfüllung und dem Pasteur erreicht werden könnte.

Die Erfindung schafft somit ein Verfahren zur Herstellung von hefetrüben Bieren, insbesondere von Weizenbier, bei dem es möglich ist, den bei der Befüllung zwangsläufig in den Behälter gelangten Sauerstoff nahezu vollständig abzubauen und trotzdem eine in der Abfüllanlage integrierte Durchlaufpasteurisierung vorzunehmen. Damit kann keimfreies und sehr geschmackstabiles Bier erzeugt werden, das sich auch für den Vertrieb als Dosenbier und für den Export selbst in ferne Länder eignet.

## Patentansprüche

1. Verfahren zur Herstellung von hefetrüben Bieren, insbesondere von Weizenbier, bei dem gehopfte Bierwürze durch Zugabe von Hefe vergoren wird, wonach das so hergestellte Bier in geeignete Behälter abgefüllt wird,
**dadurch gekennzeichnet,**
daß dem Bier vor der Abfüllung erneut Hefe sowie Bierwürze zugegeben wird, und
daß die Hefe in dem in einem Gebinde befindlichen Bier binnen 24 Stunden nach der Abfüllung, inbesondere durch Pasteurisierung, abgetötet wird.

2. Verfahren nach Anspruch 1, dadurch gekennzeichnet, daß das Abtöten innerhalb von 6 Stunden, vorzugsweise von 3 Stunden, und insbesondere innerhalb einer Stunde nach der Abfüllung, vorgenommen wird.

3. Verfahren nach Anspruch 1 oder 2, dadurch gekennzeichnet, daß das Abtöten durch einen in der Abfüllanlage integrierten Durchlaufpasteur vorgenommen wird.

4. Verfahren nach einem der Ansprüche 1 bis 3, dadurch gekennzeichnet, daß das Abtöten innerhalb einer halben Stunde nach der Abfüllung vorgenommen wird.

5. Verfahren nach einem der Ansprüche 1 bis 4, dadurch gekennzeichnet, daß die Bierwürze im leicht angegorenen Zustand zugesetzt wird.

6. Verfahren nach einem der Ansprüche 1 bis 5, dadurch gekennzeichnet, daß die Hefe als assimilierte Hefe zugesetzt wird.

7. Verfahren nach Anspruch 6, dadurch gekennzeichnet, daß sich die zugesetzte Hefe in der logarithmischen Phase befindet.

8. Verfahren nach einem der Ansprüche 1 bis 7, dadurch gekennzeichnet, daß die Zugabe an Hefe-Würze-Gemisch weniger als 3 Vol%, vorzugsweise weniger als 2 Vol%, und insbesondere weniger als 1 Vol%, beträgt.

9. Verfahren nach einem der Ansprüche 1 bis 8, dadurch gekennzeichnet, daß die Zugabe an Hefe-Würze-Gemisch einer kontinuierlichen Hefekultur entnommen wird.
